# EUROPEAN PATENT APPLICATION

(11) **EP 2 345 322 A1**
(43) Date of publication of application: **20.07.2011**
(21) Application number: 11151105.1
(22) Date of filing: 17.01.2011
(51) Int. Cl.: A01G 9/24, F24J 2/54

(54) **Greenhouse with rotatable solar panels**

(30) Priority: 18.01.2010 NL 2004103
(71) Applicant: Van Der Valk Systemen B.V., 2681 LP Monster (NL)
(72) Inventor: Van Deursen, Adrianus Gerardus, 2253 HA, Voorschoten (NL); Prins, Vincent, 2371 GB, Roelofarendsveen (NL); Broos, Johan Martien, 2673 BC, Naaldwijk (NL)
(74) Representative: van Westenbrugge, Andries

(57) **Abstract**

The invention relates to a greenhouse or glasshouse, comprising a frame (1) consisting of columns (2) and girders (3), a cover (4) which is supported on the frame (1) and which is provided with light-transmitting panels (7) which comprise adjacent cover surfaces (5,6) which, viewed in cross section, are alternately obliquely oriented at oppositely directed angles (α,β), as well as a device (8) for converting light into power, which device (8) is arranged above the cover (4) and which comprises supports (9) supported on the cover (4) as well as solar panels (10) attached to the supports (9). The solar panels (10) are, viewed in said cross section, oriented obliquely at an angle or angles γ with the same sign and are arranged next to one another according to at least one series which extends in the longitudinal direction of the cover (4) along and at a distance above an associated cover surface.

## Description

The invention relates to a greenhouse or glasshouse, comprising a frame consisting of columns and girders, a cover which is supported on the frame and provided with light-transmitting panels which comprise adjacent cover surfaces which, viewed in cross section, are oriented alternately obliquely at angles a, β with an opposite sign, as well as a device which is situated above the cover for converting light into power and which comprises supports which are supported on the cover as well as solar panels which are attached to the supports, which solar panels, viewed in said cross section, are oriented obliquely at an angle or angles γ with the same sign and which solar panels are arranged next to one another according to at least one series which extends in the longitudinal direction of the cover along and at a distance above an associated cover surface.

Such a greenhouse is known from NL-A-1026241. This greenhouse has a cover, at some distance above which solar panels are supported. The fact that this known greenhouse has ventilation windows is not mentioned. Furthermore, it is not known in which way the shadow effect of the ventilation windows and the shadow effect of the solar panels could influence one another.

A further greenhouse is known from NL-A-2000131. With this known greenhouse, horizontal stop profiles of a screen device are provided transversely across the ridges of the cover, which stop profiles support photovoltaic cells on the upper side. The likewise horizontally oriented solar panels supply electric power which can be used, for example, in order to supply the electrical installations present inside the greenhouse or in order to supply the electricity grid.

Although the solar cells extend across the entire width of the greenhouse, they are of very limited dimensions in the direction transverse thereto. In fact, the solar cells are no wider than the screens of the screen device which have been compressed to form a packet. This does make it possible to allow large amounts of sunlight into the greenhouse, but at the same time, the energy yield is small. The yield is limited still further by both the horizontal positioning of the solar cells and the rigid arrangement thereof. It is therefore not possible to ensure optimum orientation with respect to the sun during the day.

The same is true for another known embodiment of a greenhouse in which certain or all light-transmitting panels have been replaced by solar panels. Moreover, this embodiment has the drawback that the solar panels in adjacent cover surfaces will cast shadows onto each other. Another significant drawback is that the heat which the solar panels generate is emitted to the interior of the greenhouse. This is particularly undesirable in summer.

Nevertheless, a combination of a greenhouse and a device for converting sunlight into power offers an attractive basis for further developments. The greenhouse structure per se offers good support for the solar panels on top of the greenhouse which profit from an unimpeded incidence of sunlight. The reduction in the incidence of light in the greenhouse can be limited if the dimensions of the solar panels are chosen such that they are not excessively large. However, in this connection, it is necessary to improve the yield of the solar panels.

It is therefore an object of the invention to provide a greenhouse or glasshouse of the abovementioned type by means of which, on the one hand, the crops in the greenhouse can be exposed sufficiently to light and wherein, on the other hand, the yield of power can be increased. The object of the invention is also to provide a greenhouse of the abovementioned type which forms an optimum embodiment with regard to the shadow effect of the ventilation windows and solar panels.

This object is achieved in that the cover comprises ventilation windows which are displaceable between an open and a closed position, which ventilation windows are accommodated in a series of cover surfaces which are oriented at an angle or angles β with the same sign and each series of solar panels extends along a cover surface which is oriented at an angle or angles a with a sign which is opposite to the sign of the angle or angles β of said series, wherein the position of the solar panels with respect to the associated cover surface, viewed along their inclination(s), is displaced to the highest part of said cover surface and wherein the top edge of the solar panels, viewed upwards along their inclination(s), is displaced upwards beyond the top edge of the associated cover surface.

Due to the fact that the series of solar panels extend along the cover surfaces and are placed obliquely, the incident solar radiation can be exploited more readily. In this case, it is possible to leave open spaces between the solar panels of a series so that a sufficient amount of incident light can be achieved. The solar panels can be arranged at any desired height above the cover, depending on the strength and rigidity of the greenhouse structure.

In the open position, a ventilation window will cast a shadow on an adjacent cover surface, depending on the position of the sun above the horizon. Since the energy yield of a solar panel can decrease sharply if it is not exposed completely to the solar radiation, it is important that the solar panels are kept as far away as possible from the shadow effect of other parts of the greenhouse. Therefore, the position of the solar panels with respect to the associated cover surface, viewed along their inclination(s), is displaced to the highest part of said cover surface. As a result thereof, the bottom edge of the solar panels can be kept out of the shadow. In particular, the bottom edge of the solar panels, viewed upwards along their inclination(s), may be displaced upwards beyond the bottom edge of the associated cover surface.

The bottom edge of the solar panels is in this case preferably positioned such that it can produce a shadow effect on the associated cover surface which approximately coincides with a standardized shadow which is cast on said cover surface by an open ventilation window in a preceding cover surface adjacent to the cover surface which is associated with said solar panels. The term standardized shadow is understood to mean the shadow which occurs on the shortest day of the year at the highest position of the sun.

The advantage thereof is that the shadow of the ventilation window which is in the maximum open position, which shadow is present anyhow, is not increased by the solar panels, so that the light yield for the remaining part of said cover surface which is in a higher position is as great as possible. This applies both to the light yield in the greenhouse and to the energy yield of a solar panel arranged on said cover surface.

Furthermore, the top edge of the solar panels is positioned in such a manner with respect to the associated cover surface that the shadow effect thereof on a cover surface of a subsequent series of solar panels is approximately equal to the standardized shadow effect of an open ventilation window in an adjacent cover surface which adjoins the cover surface associated with the solar panels causing said shadow effect.

In order to further increase the energy yield, the solar panels may be rotatable about an axis which is oriented obliquely at an angle or angles δ with the same sign as the angle a of an adjacent cover surface for the purpose of following the sun during the daily rotation of the earth. In this connection, the operation of the solar panels can be simplified by coupling the solar panels to one another in series by means of an operating device for the joint adjustment of the solar panels of said series. Furthermore, the solar panels of different series may be coupled to one another by means of an operating device for the joint adjustment of said solar panels.

The supports may be fitted to the greenhouse structure in different ways. For example, the supports may be attached directly to the rods, if the mechanical properties thereof allow this. However, preference is given to a variant in which an auxiliary frame is provided above the cover, on which auxiliary frame the supports are fitted. Said auxiliary frame may approximately follow the contour of the cover and, viewed in cross section at right angles to the cover surfaces, comprise supporting beams which are accordingly obliquely oriented and are situated at a distance above the cover, the bottom end of which supporting beams is supported with respect to the columns and/or girders and the top ends of which are attached to one another. Furthermore, the auxiliary frame may comprise longitudinal beams which extend along the cover surfaces and which are attached to the supporting beams, to which longitudinal beams the supports are attached.

The greenhouse or the glasshouse may be configured in a known manner and, for example, with a cover which comprises, gutters, ridges and rods which extend downwards on either side of the ridges and towards in each case a gutter between which the light-transmitting panels are accommodated.

The invention will be explained in more detail below with reference to an exemplary embodiment illustrated in the figures, in which:
Fig. 1 shows a cross section of a greenhouse with a device according to the invention;
Fig. 2 shows a perspective view of the greenhouse with the solar panels in a first limit position;
Fig. 3 shows a view according to Fig. 2 with the solar panels in the other limit position.

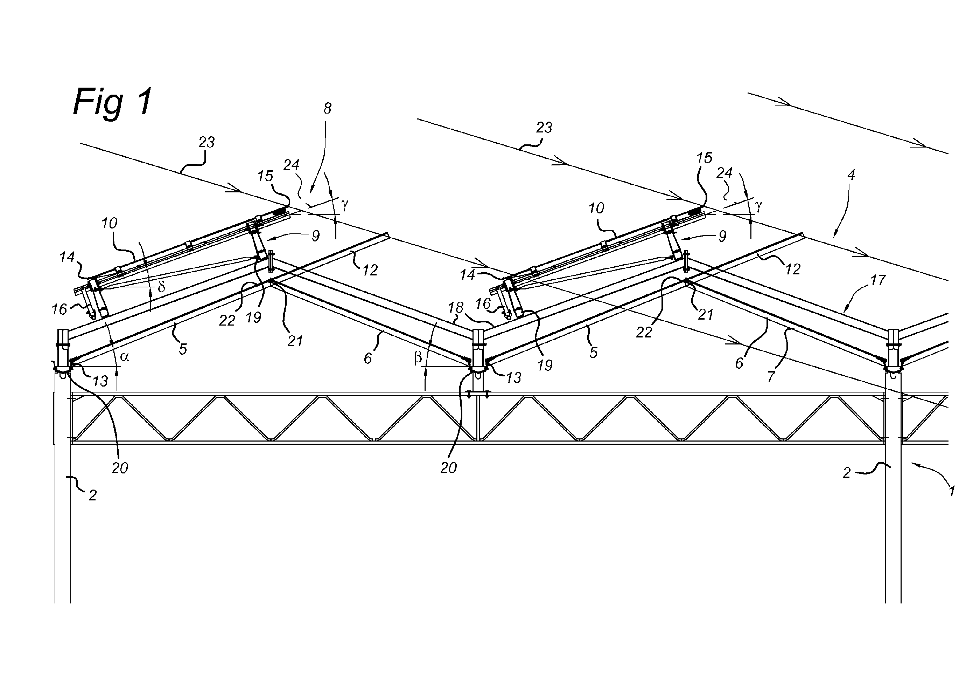

Fig. 1 shows a greenhouse, the frame 1 of which is made up of columns 2 between which girders 3 extend. These columns 2 and girders 3 support a cover which is denoted overall by reference numeral 4. Said cover consists of the gutters 20 and the ridges 21 which are connected to one another by obliquely directed rods 22. The cover 4 further consists of in each case pairs of cover surfaces 5, 6, the cover surfaces 5 of which are on the left-hand side in Fig. 1 are oriented at an angle a with respect to the horizontal and the right-hand cover surfaces according to a angle β with respect to the horizontal. The sign of said angles α and β is opposite, in other words, viewed from left to right, one cover surface 5 extends upwards and the other cover surface 6 extends downwards.

Between in each case a pair of rods 22, a gutter 20 and ridge 21, preferably light-transmitting panels 7 are accommodated. If desired, further longitudinal profiles may be arranged between the rods, which will particularly be the case with greenhouses having relatively large cover surfaces. Cover surfaces which are provided with a ventilation window 12 also have such longitudinal profiles. In the illustrated example, the right-hand cover surfaces 6 are in each case provided with ventilation windows 12.

In such a greenhouse, all types of crops can be grown, such as vegetables, flowers and the like. It is important that sufficient light for the crop in question can enter the greenhouse through the cover 4. For this purpose, the incidence of light can be adjusted in a known manner by screen installations which are furthermore not illustrated. Screens with insulating action or screens with an obscuring action may also be present inside the greenhouse. It is therefore not always necessary to allow all the available sunlight to enter the greenhouse. Therefore, there is the option of placing a power-generating device 8 on top of the cover 4.

This power-generating device 8 consists, inter alia, of an auxiliary frame 17 which extends at a certain height above the cover 4. The auxiliary frame 17 consists of supporting beams 18 which, in the illustrated example, are supported on the columns 2 and gutters 20. Furthermore, in the illustrated exemplary embodiment the auxiliary frame 17 more or less follows, in particular due to the course of the profile of the supporting beams 18, the contours of the cross sections of the cover 4. In the longitudinal direction of the cover 4, that is to say in the direction of the ridges 21 and the gutters 20 thereof, the supporting beams 18 are arranged at regular intervals to one another. In addition, they are connected to one another by the longitudinal beams 19.

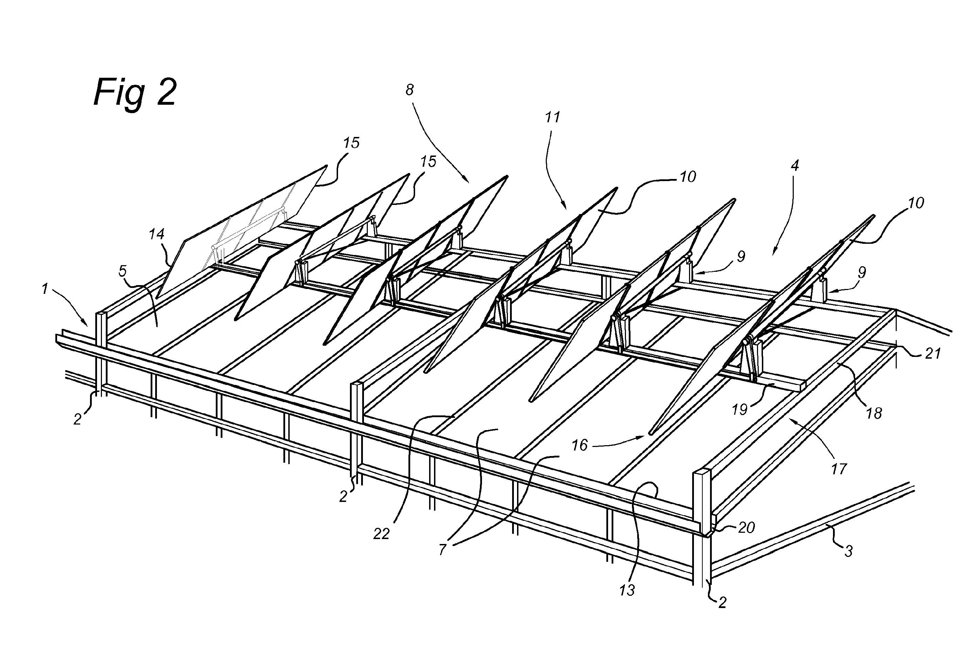

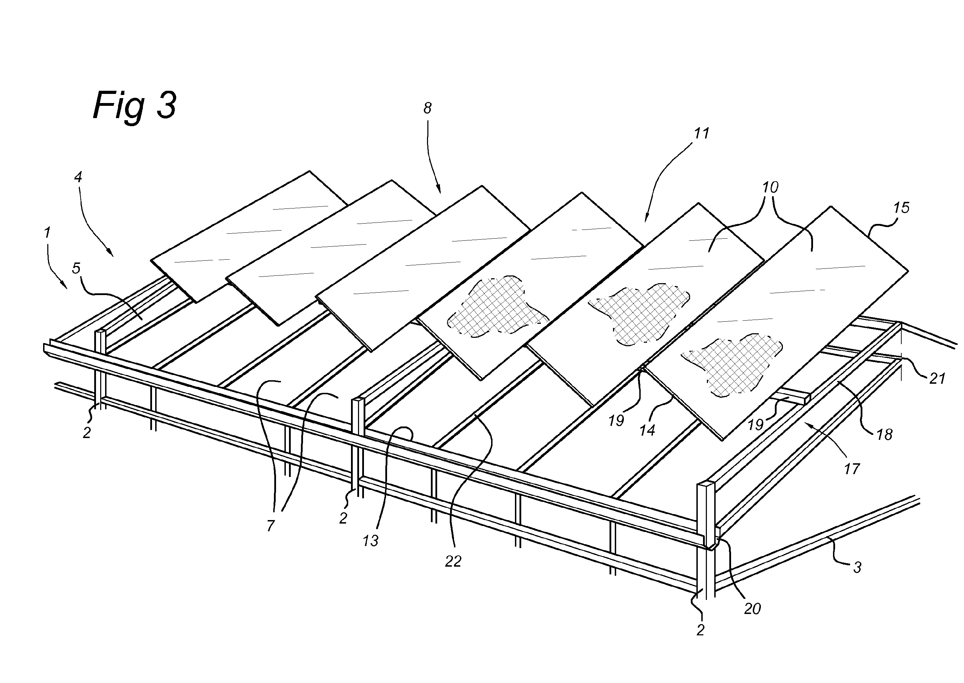

According to the invention, the supports which are denoted overall by reference numeral 9 are arranged one behind the other on these longitudinal beams 19, as is illustrated in Figs. 2 and 3. The solar panels 10 are fitted on top of these supports 9, with a series 11 of such solar panels 10 for each cover surface 5 extending in the longitudinal direction thereof. The solar panels 10 are rotatable about a pivoted connection with an axis 24. This axis 24 is obliquely oriented at an angle δ with respect to the horizontal. The sign of the angle δ is identical to the sign of the angle α of the left-hand cover surfaces 5.

The solar panels 10 are obliquely oriented at an angle γ with respect to the horizontal, the sign of which is identical to that of the angle a of the left-hand cover surfaces 5. The angle γ may be equal to the angle δ of the axis 24, but this is not imperative. Preferably, the solar panels 10 run obliquely at more or less the same angle as these left-hand cover surfaces 5. However, it is of course also possible for the angles α and γ to differ in size, depending on the optimum position of the solar panels 10 with respect to the incidence of sunlight 23. The illustrated situation is that which occurs on the shortest day at the highest position of the sun at the location of the greenhouse.

The solar panels 10 are preferably covered with photovoltaic cells, as a result of which the sunlight is converted into electricity. However, it is also possible for other converters to be arranged on the solar panels, for example for converting sunlight into heat.

The solar panels 10 are fitted on the auxiliary frame 17 in such a manner that they, viewed in the direction of their inclination and of the inclination of the associated left-hand cover surface 5, are positioned displaced upwards with respect to said associated cover surface 5. As a result thereof, viewed upwards along the inclination of the solar panels 10, the bottom edge 14 thereof is situated beyond the bottom edge 13 of the associated cover surface 5. The top edge 15 of the solar panels also lies in said direction beyond the ridge 21. The advantage of this position is that the solar panels 10 are therefore always completely in the sun. This is an important requirement in order to ensure the maximum efficiency of the solar panels 10, as will be explained below.

As is illustrated in Fig. 1, the ventilation windows 12, in their open position, cast a shadow on the left-hand cover surfaces 5. The solar panels 10 would also be subjected to said shadow effect if they were not arranged in the displaced position explained above. The upwardly displaced position has the advantage that the solar panels remain outside the reach of the shadow of the ventilation windows. In addition, the position of the solar panels is chosen such that the top edge 15 thereof produces a shadow effect on the left-hand cover surfaces 5 which, at worst, corresponds to the shadow effect of an open ventilation window 12. This ensures that the solar panels do not cause any additional shadow effect.

At the same time, the solar panels 10 are at a certain distance above the associated left-hand cover surfaces 5 and above the auxiliary frame 17, in such a manner that they can be rotated about the axes 14 for the purpose of following the solar radiation during the daily rotation of the earth. In order to ensure even with this movement that the solar panels are always completely in the sun, a series 11 of open spaces are provided between the solar cells, as is illustrated in Figs. 2 and 3.

### List of reference numerals

- 1.: Frame
- 2.: Column
- 3.: Girder
- 4.: Cover
- 5.: Cover surface
- 6.: Cover surface
- 7.: Light-transmitting panel
- 8.: Power-generating device
- 9.: Support
- 10.: Solar panel
- 11.: Series of solar panels
- 12.: Ventilation window
- 13.: Bottom edge of cover surface 5
- 14.: Bottom edge of solar panel
- 15.: Top edge of solar panel
- 16.: Operating device
- 17.: Auxiliary frame
- 18.: Supporting beam
- 19.: Longitudinal beam
- 20.: Gutter
- 21.: Ridge
- 22.: Rod
- 23.: Solar radiation
- 24.: Axis of rotary shaft of support/solar panel
- a: Pitch of cover surface 5
- β: Pitch of cover surface 6
- γ: Pitch of solar panel 10
- δ: Pitch of rotary axis 24

## Claims

1. Greenhouse or glasshouse, comprising a frame (1) consisting of columns (2) and girders (3), a cover (4) which is supported on the frame and provided with light-transmitting panels (7) which comprise adjacent cover surfaces (5, 6) which, viewed in cross section, are oriented alternately obliquely at angles a, β with an opposite sign, as well as a device (8) which is situated above the cover (4) for converting light into power which comprises supports (9) which are supported on the cover as well as solar panels (10) which are attached to the supports, which solar panels (10), viewed in said cross section, are oriented obliquely at an angle or angles γ with the same sign and which solar panels (10) are arranged next to one another according to at least one series (11) which extends in the longitudinal direction of the cover (4) along and at a distance above an associated cover surface (5), wherein the angle or angles γ of the solar panels (10) have the same sign as the angle a of the associated cover surface (5), **characterized in that** the cover (4) comprises ventilation windows (12) which are displaceable between an open and a closed position, which ventilation windows are accommodated in a series of cover surfaces (6) which are oriented at an angle or angles β with the same sign and each series (11) of solar panels (10) extends along a cover surface (5) which is oriented at an angle or angles a with a sign which is opposite to the sign of the angle or angles β of said series, wherein the position of the solar panels (10) with respect to the associated cover surface (5), viewed along their inclination(s), is displaced to the highest part of said cover surface and wherein the top edge (15) of the solar panels (10), viewed upwards along their inclination(s), is displaced upwards beyond the top edge (21) of the associated cover surface (5).

2. Greenhouse according to Claim 1, wherein the bottom edge (14) of the solar panels (10), viewed upwards along their inclination(s), is displaced upwards beyond the bottom edge (13) of the associated cover surface (5).

3. Greenhouse according to one of the preceding claims, wherein the bottom edge (14) of the solar panels (10) produces a shadow effect on the associated cover surface (5) which approximately coincides with a standardized shadow which is cast on said cover surface (5) by an open ventilation window (12) in a preceding cover surface (6) adjacent to the cover surface (5) which is associated with said solar panels (10).

4. Greenhouse according to one of the preceding claims, wherein the top edge (15) of the solar panels (10) is positioned in such a manner with respect to the associated cover surface (5) that the shadow effect thereof on a cover surface (5) of a subsequent series of solar panels (10) is approximately equal to a standardized shadow effect of an open ventilation window (12) in an adjacent cover surface (6) which adjoins the cover surface (5) associated with solar panels (10) causing said shadow effect.

5. Greenhouse according to one of the preceding claims, wherein the solar panels (10) are rotatable about an axis (24) which is oriented obliquely at an angle or angles δ with the same sign as the angle a of an adjacent cover surface (5) for the purpose of following the sun during the daily rotation of the earth.

6. Greenhouse according to Claim 5, wherein solar panels (10) are coupled to one another in series (11) by means of an operating device (16) for the joint adjustment of the solar panels of said series.

7. Greenhouse according to Claim 5 or 6, wherein the solar panels (10) of different series (11) are coupled to one another by means of an operating device for the joint adjustment of said solar panels.

8. Greenhouse according to one of the preceding claims, wherein an auxiliary frame (17) is provided above the cover (4), on which auxiliary frame the supports (9) are fitted.

9. Greenhouse according to Claim 8, wherein the auxiliary frame (17) approximately follows the contour of the cover (4) and, viewed in cross section at right angles to the cover surfaces, comprises supporting beams (18) which are accordingly obliquely oriented and are situated at a distance above the cover (4), the bottom end of which supporting beams is supported with respect to the columns (1) and/or girders (2) and the top ends of which are attached to one another.

10. Greenhouse according to Claim 9, wherein the auxiliary frame comprises longitudinal beams (19) which extend along the cover surfaces (5, 6) and which are attached to the supporting beams (18), to which longitudinal beams the supports (9) are attached.

11. Greenhouse according to one of the preceding claims, wherein the cover (4) comprises gutters (20), ridges (21) as well as rods (22) extending downwards on either side of the ridges and towards in each case a gutter between which the light-transmitting panels are accommodated.

12. Greenhouse according to one of the preceding claims, wherein the solar panels (10) comprise photovoltaic cells.

13. Greenhouse according to one of the preceding claims, wherein the angle or angles γ of the solar panels (10) differ from the angle a of the associated cover surface (5).
